# EUROPEAN PATENT SPECIFICATION

(11) **EP 4 104 116 B1**
(45) Date of publication and mention of the grant of the patent: **08.04.2026**
(21) Application number: 20918296.3
(22) Date of filing: 13.02.2020
(51) Int. Cl.: G06K 19/077, G06Q 10/00, G06Q 30/00

(54) **METHOD, KIT, AND SYSTEM FOR TRACKING GRAPHIC FILM APPLICATIONS**
VERFAHREN, KIT UND SYSTEM ZUR VERFOLGUNG GRAPHISCHER FILMANWENDUNGEN
PROCÉDÉ, KIT ET SYSTÈME DE SUIVI D'APPLICATIONS DE FILM GRAPHIQUE

(43) Date of publication of application: 21.12.2022
(73) Proprietor: Avery Dennison Corporation, Mentor, OH 44060 (US)
(72) Inventor: MOUSSALLEM, Maroun D., Solon, Ohio 44139 (US); ZHU, Lily, Shanghai 201615 (CN); WEN, Li, Shanghai 201103 (CN); LI, Hui, Shanghai 201824 (CN); JIANG, Xiaoyun, Shanghai 200032 (CN)
(74) Representative: Cueto, Sénida
(86) International application number: PCT/CN2020/075060
(87) International publication number: WO 2021/159382

(56) References cited:
- WO-A2-2019/030775
- AU-A1- 2008 207 666
- CN-A- 1 932 867
- CN-A- 101 371 260
- CN-A- 101 877 090
- CN-A- 107 316 168
- US-A1- 2002 174 012
- US-A1- 2005 091 821
- US-A1- 2011 106 372
- US-A1- 2020 026 891

## Description

### FIELD OF THE INVENTION

The present invention generally relates to radio frequency identification (RFID) tag and label (and other machine-readable) detection kits and systems, and to methods of detecting RFID tags and label (and other machine-readable tags and labels), particularly to those used in conjunction with graphic films applied to vehicles.

### BACKGROUND OF THE INVENTION

Graphic articles are used for a number of different purposes, including to provide information, for advertising, and for decoration. The graphic article construction may include a film layer (or multiple layers of the same or different films) and an adhesive layer to adhere the graphic article to a substrate. Graphic articles are typically flexible, which enable their attachment to a wide range of surfaces and objects. Some or all of the layers of film may contain images, such as printed images, to generate the graphic pattern or design.

Graphic articles are used in a number of vehicle applications, especially in automotive aftermarket applications, such as customized decorative car wrap, commercial informational vehicle wrap (for promotions, advertising, branding and the like), window films, paint protection films (for protecting vehicle surface from debris, weathering, and wear and tear), paint replacement films, and the like.

Because of the nature of the graphic articles and the need for them to have continued durability and pleasing aesthetic, the manufacturer of the graphic article (which may include the film manufacturer, the graphic film construction manufacturer, and/or the graphic article converter, collectively referred to herein as the "material provider") may wish to provide a warranty to the end-user, such as, for example, the car owner who has had a custom decorative car wrap applied to his or her car. In the warranty, the material provider may promise that the product is free from material defects in materials and workmanship. If this is not the case, then the material provider may promise repair or replace the graphic article. Typically, such warranties require that the graphic article has been properly installed and properly maintained as well as being used in the intended environment. For example, if the graphic article is only suitable for temperate environments, then the material provider may not warrant the product if it is installed in harsh desert conditions.

Because the material provider is typically not the party that installs the product for the end-user or does not have any direct communication with the end-user unless and until there is an alleged defect, it can sometimes become problematic for the material provider to properly process warranty claims from the end-user, including confirming the veracity of the warranty information (type of product, product details such lot number, thickness, color, and the like), installation date, installation conditions, and the like). Thus, it would be useful for the material provider to be able track the installation of the product, as well as set up permission with the end user to communicate as needed directly with the end-user (such as the car owner) via electronic communications (via mobile devices and computers, for example). The methods, kits, and systems of the present invention are directed toward these, as well as other, important ends. AU2008207666A1 describes a method of advertising on motor vehicles, the method comprising providing a perforated planar material as an advertising medium having an advertisement printed on an external face thereof and affixing the material again an internal surface of a motor vehicle. The material may comprise an RFID device. US2005/091821A1 describes a manufacturing machine assembly for producing an article having an RFID device with the article fabricated from a continuous sheet of stock having a top surface and a bottom surface with an adhesive layer and release liner.

### SUMMARY OF THE INVENTION

The invention is as defined in the appended claims. The invention relates generally to methods, kits, and systems using machine-readable tags and labels to assist in communications between the material provider and the end-user of a graphic film product, especially when the end-user does not acquire the graphic film product directly from the material, where such communications may relate to the warranty for the graphic film product.

Accordingly, one embodiment the invention is directed to methods for communicating between an owner of a vehicle and a material provider, comprising:
providing a self-adhesive film from said material provider suitable for protecting or decorating said vehicle;
providing a machine-readable label capable of wireless communication with a content management server associated with said material provider;
applying said self-adhesive film to said vehicle;
applying said machine-readable label to said vehicle; and
establishing at least one wireless communication from said machine-readable label to said content management server, wherein said at least one wireless communication achieves at least one of:
   requesting permission from said owner for said material provider to send future communications to said owner;
   triggering a warranty from said material provider for said film material to said owner;
   after said material provider receives permission from said owner, sending future communications to said owner; and
   combinations thereof.

Another embodiment the invention is directed to kits for communications between an owner of a vehicle and a material provider, comprising:
a self-adhesive film material for protecting or decorating said vehicle;
a machine-readable label suitable for adhering to said vehicle;
wherein said machine-readable label comprises:
   a facestock comprising a first surface and a second surface;
   a pressure sensitive adhesive applied on at least a portion of said first surface;
   a machine-readable component applied in or on said facestock; and
   optional printed indicia on said second surface,
   wherein the machine-readable component establishes at least one wireless communication with a content management server and wherein the at least one wireless communication achieves at least one of:
      requesting permission from said owner for said material provider to send future communications to said owner;
      triggering a warranty from said material provider for said film material to said owner;
      after said material provider receives permission from said owner, sending future communications to said owner; and
      combinations thereof.

A further embodiment of the invention is directed systems for communications between an owner of a vehicle and a material provider, comprising:
said kit described herein; and
a content management server associated with said material provider.

The summary of the invention is provided as a general introduction to some of the embodiments of the invention, and is not intended to be limiting. Additional example embodiments, including variations and alternative configurations, of the invention are provided herein.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. As will be realized, the subject matter described herein is capable of other and different embodiments and its several details are capable of modifications in various respects, all without departing from the claimed subject matter. Accordingly, the drawings and description are to be regarded as illustrative and not restrictive. In the drawings:
**FIGURE 1** illustrates a schematic flow diagram of an exemplary embodiment of a method described herein.
**FIGURE 2** illustrates a schematic drawing of an exemplary embodiment of a system described herein.
**FIGURE** 3 illustrates a cross section of an exemplary embodiment of a self-adhesive film construction as described herein, including the backing film, pressure sensitive adhesive, and optional release liner described herein.
**FIGURE 4A** illustrates a cross section of an exemplary embodiment of a machine-readable label construction as described herein, including a facestock layer, a machine-readable component (embedded), pressure sensitive adhesive layer, and optional printed indicia described herein.
**FIGURE 4B** illustrates a cross section of an exemplary embodiment of a machine-readable label construction as described herein, including a facestock layer, a machine-readable component (on surface) and pressure sensitive adhesive layer described herein.

### DETAILED DESCRIPTION OF THE ILLUSTRATED EMBODIMENTS

### Definitions

As employed above and throughout the disclosure, the following terms, unless otherwise indicated, shall be understood to have the following meanings.

As used herein, the terms "comprises," "comprising," "includes," "including," "has," "having" or any other variation thereof, are intended are open-ended and cover a non-exclusive inclusion. For example, a process, method, article, or apparatus that comprises a list of elements is not necessarily limited to only those elements but may include other elements not expressly listed or inherent to such process, method, article, or apparatus. Also, use of "a" or "an" is employed to describe elements and components described herein. This is done merely for convenience and to give a general sense of the scope of the invention. This description should be read to include "one" or "at least one" and the singular also includes the plural, unless it is obvious that it is meant otherwise by the context. As used herein, the term "about," when referring to a measurable value such as an amount, a temporal duration, and the like, is meant to encompass variations of ±10%, preferably, ±8%, more preferably, ±5%, even more preferably, ±1%, and yet even more preferably, ±0.1% from the specified value, as such variations are appropriate to perform the disclosed methods.

As used herein, "vehicle" refers to any machine used for mobile transport (of humans, animals, goods or other cargo) by land, water, or air, including, but not limited to, automobiles, trucks, trailers, buses, trains, motorcycles, bicycles, scooters, boats, airplanes, snowmobiles, military vehicles, and the like.

As used herein, "content management server" refers to a machine that controls access to the hardware, software, and other resources on a network and provides a centralized storage area for programs, data, and information. The server may support from two to several thousand connected computers at the same time. People use personal computers (including mobile devices such as mobile phones) or terminals (with monitor, keyboard, and memory) to access data, information, and programs on a server.

As used herein, "material provider" refers to the manufacturer of the film or self-adhesive film material or a converter or distributor of the self-adhesive film material or any third party who acts as an agent on behalf of any of these parties as part of the methods or systems of the invention described herein.

As used herein, "printed indicia" means any number, letter, symbol, graphic or combination thereof printed, draw, written, or applied by any means on the second surface of the label.

As used herein, "pressure sensitive adhesive" or "PSA" refers to a material that may be identified by the Dahlquist criterion, which defines a pressure sensitive adhesive as an adhesive having a one second creep compliance of greater than 1x10⁻⁶ cm²/dyne as described in Handbook of PSA Technology, Donatas Satas (Ed.), 2nd Edition, page 172, Van Nostrand Reinhold, New York, N.Y., 1989. Since modulus is, to a first approximation, the inverse of creep compliance, pressure sensitive adhesives may also be defined as adhesives having a Young's modulus of less than 1x10⁶ dynes/cm². Another well-known means of identifying a pressure sensitive adhesive is an adhesive that it is aggressively and permanently tacky at room temperature and firmly adheres to a variety of dissimilar surfaces upon mere contact without the need of more than finger or hand pressure, and which may be removed from smooth surfaces without leaving a residue, as described in Glossary of Terms Used in the Pressure Sensitive Tape Industry provided by the Pressure Sensitive Tape Council, 1996. Another suitable definition of a suitable pressure sensitive adhesive is that it preferably has a room temperature storage modulus within the area defined by the following points as plotted on a graph of modulus versus frequency at 25°C: a range of moduli from about 2x10⁵ to 4x10⁵ dynes/cm² at a frequency of about 0.1 radians/sec (0.017 Hz), and a range of moduli from about 2x10⁶ to 8x10⁶ dynes/cm² at a frequency of approximately 100 radians/sec (17 Hz). See, for example, Handbook of PSA Technology (Donatas Satas, Ed.), 2nd Edition, page 173, Van Nostrand Rheinhold, N.Y., 1989. Any of these methods of identifying a pressure sensitive adhesive may be used to identify suitable pressure sensitive adhesives for use in the film constructions of the invention.

All percentages noted herein are percentages by weight based upon the weight of the composition, unless indicated otherwise.

### Methods, Kits, and Systems

Accordingly, one embodiment the invention is directed to methods for communicating between an owner of a vehicle and a material provider, comprising:
providing a self-adhesive film from said material provider suitable for protecting or decorating said vehicle;
providing a machine-readable label capable of wireless communication with a content management server associated with said material provider;
applying said self-adhesive film to said vehicle;
applying said machine-readable label to said vehicle; and
establishing at least one wireless communication from said machine-readable label to said content management server, wherein said at least one wireless communication achieves at least one of:
   requesting permission from said owner for said material provider to send future communications to said owner;
   triggering a warranty from said material provider for said film material to said owner;
   after said material provider receives permission from said owner, sending future communications to said owner; and
combinations thereof.

Another embodiment the invention is directed to kits for communications between an owner of a vehicle and a material provider, comprising:
a self-adhesive film material for protecting or decorating said vehicle;
a machine-readable label suitable for adhering to said vehicle;
wherein said machine-readable label comprises:
   a facestock comprising a first surface and a second surface;
   a pressure sensitive adhesive applied on at least a portion of said first surface;
   a machine-readable component applied in or on said facestock; and
   optional printed indicia on said second surface,
   wherein the machine-readable component establishes at least one wireless communication with a content management server and wherein the at least one wireless communication achieves at least one of:
      requesting permission from said owner for said material provider to send future communications to said owner;
      triggering a warranty from said material provider for said film material to said owner;
      after said material provider receives permission from said owner, sending future communications to said owner; and
      combinations thereof.

A further embodiment of the invention is directed systems for communications between an owner of a vehicle and a material provider, comprising:
said kit described herein; and
a content management server associated with said material provider.

The methods of the invention comprise:
establishing at least one wireless communication from said machine-readable label to said content management server.

In certain embodiments, said wireless communication is initiated via an RFID-enabled interrogating device or QR-enabled interrogating device. In other embodiments, said RFID-enabled interrogating device is an NFC-enabled or HF-enabled mobile device. The wireless communication may be taken by the vehicle owner or someone on behalf of the vehicle owner, such as the installer of the self-adhesive film material and machine-readable label.

In certain embodiments, said at least one wireless communication achieves transferring installation data to said content management server. In the present invention, said at least one wireless communication achieves at least one of:
requesting permission from said owner for said material provider to send future communications to said owner;
triggering a warranty from said material provider for said film material to said owner;
after said material provider receives permission from said owner, sending future communications to said owner; and
combinations thereof.

In certain embodiments, said installation data is data selected from the group consisting of product name, installation date, installation location, installer name, owner name, vehicle make, vehicle model, vehicle identification number, and combinations thereof.

In certain embodiments, said machine-readable label comprises:
a facestock comprising a first surface and a second surface;
a pressure sensitive adhesive applied on at least a portion of said first surface;
a machine-readable component embedded in said machine-readable label; and optional printed indicia on said second surface.

In certain embodiments, said machine-readable component is a bar code, matrix barcode (especially QR code), an RFID device or tag, low energy BLUETOOTH device; or infrared device. In other embodiments, the machine-readable component is a QR code or an RFID tag.

In certain embodiments, said printed indicia is present; and said printed indicia comprises a trademark for said film material.

In certain embodiments, said self-adhesive film material comprises:
at least one backing film;
a pressure sensitive adhesive; and
an optional release liner.

In yet another embodiment, the invention is directed systems for communications between an owner of a vehicle and a material provider, comprising:
said kit described herein;
a content management server associated with said material provider; and
an interrogator for said machine-readable component.
In certain embodiments, said interrogator is a mobile telephone or a personal digital assistant.

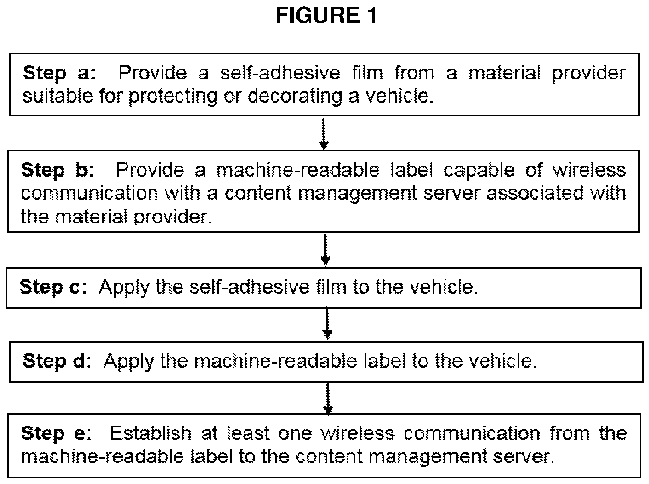

**FIGURE 1** illustrates a schematic flow diagram of an exemplary embodiment of a method described herein. In a first embodiment, in a first step a self-adhesive film from said material provider suitable for protecting or decorating said vehicle is provided (step a); in a second step a machine-readable label capable of wireless communication with a content management server associated with the material provider is provided (step b); in a third step the self-adhesive film is applied to the vehicle (step c); and in a fourth step the machine-readable label is applied to the vehicle (step d). It should be appreciated that the order of the steps may differ in any fashion provided that step a proceeds step c and step b proceeds step d. For example, the order may be step a - step c - step b - step d or step b - step d - step a - step c or step b - step a - step c - step d or step b - step a - step d - step c or steps a/b simultaneously and steps c/d simultaneously. In certain embodiments, step e establishes at least one wireless communication from the machine-readable label to the content management server.

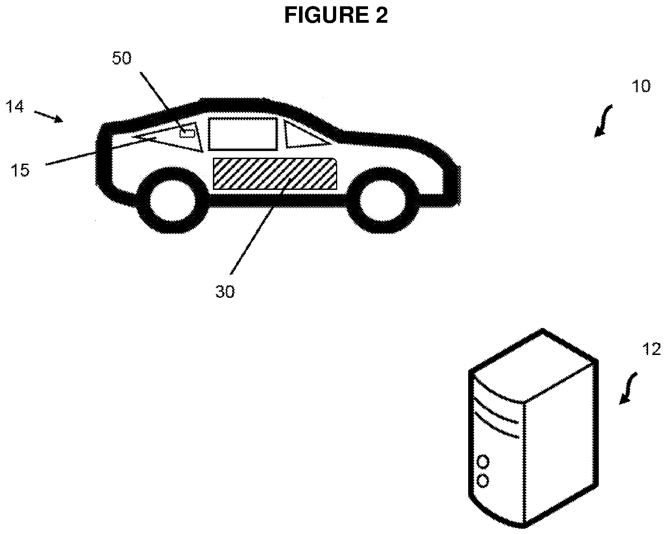

**FIGURE 2** illustrates a schematic drawing of an exemplary embodiment of a system described herein for communications between an owner of a vehicle and a material provider. In one embodiment, a system **10** includes a content management server **12** maintained by a material provider (not shown; either the manufacturer of the film or self-adhesive film material or a converter or distributor of the self-adhesive film material or any third party who acts as an agent on behalf of any of these parties). An installer (usually a third party independent of the vehicle owner or material provider, especially in automotive aftermarket applications) uses a kit including at least a self-adhesive film material **30** for protecting or decorating said vehicle **14** and a machine-readable label **50** suitable for adhering to said vehicle **14.** Before, during, or shortly after installation of the self-adhesive film material **30,** the installer applies the machine-readable label **50** to the vehicle, such as for example on the window **15.** Preferably, the machine-readable label is installed on a window of the vehicle, but it may be applied in any suitable place inside or outside of the vehicle that permits the interrogator **20** (not shown) to read the machine-readable label **50** to establish or continue electronic communications between the vehicle owner and the material provider for communicating permission from the vehicle owner and establishing the warranty process between the vehicle owner and the material provider, for example.

### Self-Adhesive Film Material

Suitable self-adhesive film material constructions typically include:
at least one backing film;
a pressure sensitive adhesive; and
an optional release liner.

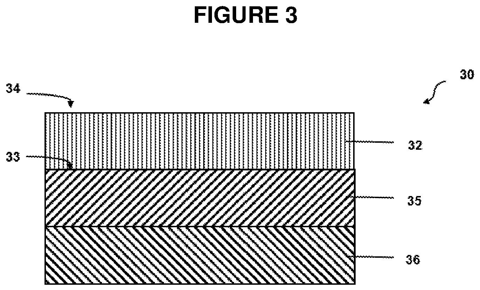

With reference to **FIGURE 3****,** a representative self-adhesive film construction **30** is shown in cross section. A backing film **32** has a first surface **33** and a second surface **34**. A pressure sensitive adhesive layer **35** is applied on at least a portion of the first surface **33.** An optional release liner **36** may be applied to the pressure sensitive adhesive layer **35** to protect the pressure sensitive adhesive layer **35** and permit proper installation of the self-adhesive film construction **30** to a vehicle (not shown). Optional coatings are not shown.

### Machine-Readable Label

Suitable machine-readable label constructions typically include:
a facestock comprising a first surface and a second surface;
a pressure sensitive adhesive applied on at least a portion of said first surface;
a machine-readable component embedded in said machine-readable label; and optional printed indicia on said second surface.

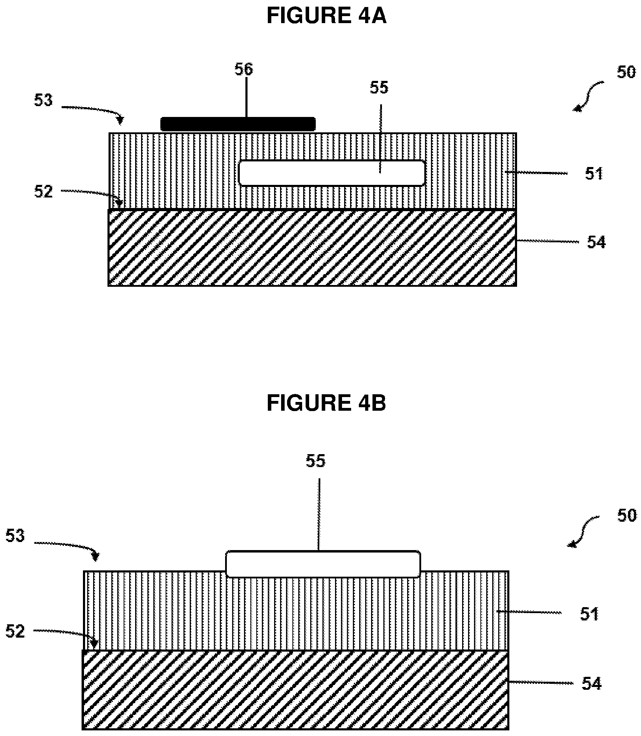

With reference to **FIGURE 4A****,** a representative machine-readable label construction **50** is shown in cross section. The machine-readable label construction **50** includes a facestock **51** having a first surface **52** and a second surface **53**. A pressure sensitive adhesive layer **54** applied on at least a portion of the first surface **52**. A machine-readable component **55** (such as an RFID tag) is embedded facestock **51** in the machine-readable label construction **50**. The machine-readable label construction **50** may include optional printed indicia **56** (which may be human readable; such as a trademark) on the second surface **53**. Optional release liner and optional coatings are not shown.

With reference to **FIGURE 4B****,** a representative machine-readable label construction **50** is shown in cross section. The machine-readable label construction includes a facestock **51** having a first surface **52** and a second surface **53**. A pressure sensitive adhesive layer **54** applied on at least a portion of the first surface **52**. A machine-readable component **55** (such as an RFID tag) is located on the second surface **53** of the facestock **51** in the machine-readable label construction **50**. The machine-readable label construction **50** may include optional printed indicia (not shown: which may be human readable) on the second surface **53**. Optional release liner and optional coatings are not shown.

Further details of the various embodiments and components thereof are provided below.

### Backing Films

The backing film(s) useful in the self-adhesive film material constructions of the invention include those materials typically used in graphics applications. Typical polymers include one or more polymers selected from polyvinyl chloride (PVC), plasticized polyvinyl chloride, acrylic (*i.e.*, polyacrylate(s), polymethacrylate(s), and copolymers thereof), polyolefin (polyethylene, polypropylene, and copolymers thereof), polyurethane, fluoropolymer, polyester, cellulose ester, acetals, and blends thereof.

The films described herein can be formed from a wide array of techniques including, but not limited to, extrusion, cast, and calendering processes. In some embodiments, the films have a thickness of at least about 10 microns and typically within a range of from about 20 microns to about 300 microns or more. Thus, it will be understood that the films can exhibit a thickness greater than 300 microns.

In some embodiments, the backing film used in the self-adhesive film material constructions may be coated with one or more coating layers. The term "coating" as used herein refers to a coating disposed on and in direct contact with an underlying backing film or other layer. Typically, coatings are initially in a liquid or flowable state; deposited or applied on the underlying backing film or other layer; and then cured or otherwise solidified. For applications in which the coating is formed into a film, the film is typically independent from an underlying film or other layer. In many versions, backing films as described herein are free standing films. However, films formed from the coating as described herein may be positioned alongside or in conjunction with the backing film or other layers. The coating may have a thickness or coating weight greater than 1 g/m² (gsm) and typically within a range of from 1 gsm to 30 gsm. In certain embodiments, the coatings have a thickness or coating weight within a range of from 5 gsm to 30 gsm. However, it will be understood that the coatings may have thicknesses or coating weights less than 1 gsm, and/or greater than 30 gsm.

Coatings useful in the invention can be formed using a wide array of techniques. Upon depositing the composition upon a surface of interest, the layer of composition dries, hardens, and/or otherwise cures to form a coating. After deposition of the composition and during or after formation of the coating, one or more post-deposition treatments may be utilized such as exposure to radiation or heat.

In some embodiments, the coatings or films undergo polymerization and/or crosslinking during preparation or deposition. In some embodiments, one or more of the components in the composition undergoes polymerization.

### Pressure Sensitive Adhesives

The pressure sensitive adhesive useful in the self-adhesive film construction and/or the machine-readable label construction may be formed into a single layer or contain multiple layers of adhesive. The multiple layers of adhesive may be applied to the film or laminate simultaneously using methods known in the art. Examples of suitable adhesive coating methods include slot die coating, bullnose coating, reverse roll coating and the like.

### Optional Tackifiers and Other Additives

The adhesives of the present invention may further comprise additives such as pigments, colors or colorants, fillers, plasticizer, diluents, antioxidants, UV absorbers, tackifiers, and the like, and combinations thereof.

Pigment, if desired, is provided in an amount sufficient to impart the desired color to the adhesive. Examples of pigments include, without limitation, solid inorganic fillers such as carbon black, titanium dioxide and the like, and organic dyes.

In addition to tackifiers, other additives may be included in the pressure sensitive adhesives to impart desired properties. For example, plasticizers may be included, and they are known to decrease the glass transition temperature of an adhesive composition containing elastomeric polymers. Antioxidants also may be included in the adhesive compositions. Cutting agents such as waxes and surfactants also may be included in the adhesives. Light stabilizers, heat stabilizers, and UV absorbers also may be included in the adhesive compositions. Ultraviolet absorbers include benzo-triazol derivatives, hydroxy benzyl phenones, esters of benzoic acids, oxalic acid, diamides, and the like. Light stabilizers include hindered amine light stabilizers, and the heat stabilizers include dithiocarbamate compositions such as zinc dibutyl dithiocarbamate.

A wide variety of tackifiers can be used to enhance the tack and peel of the adhesive. These include rosins and rosin derivatives including rosinous materials that occur naturally in the oleoresin of pine trees, as well as derivatives thereof including rosin esters, modified rosins such as fractionated, hydrogenated, dehydrogenated, and polymerized rosins, modified rosin esters and the like.

There may also be employed terpene resins which are hydrocarbons of the formula C₁₀ H₁₆, occurring in most essential oils and oleoresins of plants, and phenol modified terpene resins like α-pinene, β-pinene, dipentene, limonene, myrecene, bornylene, camphene, and the like. Various aliphatic hydrocarbon resins like Escorez 1304, manufactured by Exxon Chemical Co., and aromatic hydrocarbon resins based on C₉, C₅, dicyclopentadiene, coumarone, indene, styrene, substituted styrenes and styrene derivatives and the like can also be used.

Hydrogenated and partially hydrogenated resins such as Regalrez 1018, Regalrez 1033, Regalrez 1078, Regalrez 1094, Regalrez 1126, Regalrez 3102, Regalrez 6108, *etc.,* produced by Eastman Chemical Company, can be used. Various terpene phenolic resins of the type SP 560 and SP 553, manufactured and sold by Schenectady Chemical Inc., Nirez 1100, manufactured and sold by Reichold Chemical Inc., and Piccolyte S-100, manufactured and sold by Hercules Corporation, are particularly useful tackifiers for the present invention. Various mixed aliphatic and aromatic resins, such as Hercotex AD 1100, manufactured and sold by Hercules Corporation, can be used.

While the resins described above are quite useful for tackifying the copolymers of the instant invention, the particular tackifying resin and/or amount selected for a given formulation may depend upon the type of acrylic polymer being tackified. Many resins which are known in the prior art as being useful for tackifying acrylic based pressure sensitive adhesives can be effectively used in the practice of the present invention, although the scope of the invention is not limited to only such resins. Resins described in Satas, Handbook of Pressure Sensitive Adhesive Technology, Von Nostrand Reinhold, Company, Chapter 20, pages 527-584 (1989) could be used.

The amount of tackifier used in the present invention is dependent upon the type of copolymer and tackifier used. Typically, pressure-sensitive adhesive compositions prepared in accordance with the present invention will comprise from 5 to about 60% by weight total of one or more tackifiers.

In one embodiment, the tackifier has a ring and ball softening point of from about 100°C to about 150°C. In one embodiment, the tackifier comprises a terpene phenolic tackifier having a ring and ball softening point of from about 110°C to about 120°C.

In another embodiment, the added resin may serve a dual purpose. For example, a resin such as Wingstay L^{®}, a butylated reaction product of para-cresol and dicyclopentadiene with an average molecular weight of 650 produced by Eliokem, can serve both as a tackifier and an antioxidant.

### Optional Release Liner

The release liners that may be utilized in the useful in the self-adhesive film construction and/or the machine-readable label construction of the invention may contain any of a variety of materials known to those of skill in the art to be suitable as release liners. In one embodiment, the release liner contains or is a 90# stayflat liner. Other suitable release liners include silicone coated films or polycoated kraft paper, as are known in the art. Suitable pre-siliconized release liners are available commercially. The release liner may be flat or structured. Specialized liners, including those that provide air egress through structures and channels in the pressure sensitive adhesive, may preferably be used. Suitable air egress release liners are those sold under the EZApply and EZRS brand names by Avery Dennison Corporation.

### Machine-readable Components

### RFID

RFID tags and labels (collectively referred to herein as "devices") are widely used to associate an object with an identification code. RFID devices generally have a combination of antennas and analog and/or digital electronics, which may include, for example, communications electronics, data memory, and control logic. For example, RFID tags are used in conjunction with security-locks in cars, for access control to buildings, and for tracking inventory and parcels. Some examples of RFID tags and labels appear in U.S. Patent Nos. 6,107,920; 6,206,292; and 6,262,292.

As noted above, RFID devices are generally categorized as labels or tags. RFID labels are RFID devices that are adhesively or otherwise have a surface that is attached directly to objects. RFID tags, in contrast, are secured to objects by other means, for example by use of a plastic fastener, string or other fastening means. Nevertheless, RFID devices are referred to herein somewhat interchangeably as "tags" or "labels."

RFID devices include active tags and labels, which include a power source, and passive tags and labels, which do not. In the case of passive tags, in order to retrieve the information from the chip, a "base station" or "reader" sends an excitation signal to the RFID tag or label. The excitation signal energizes the tag or label, and the RFID circuitry transmits the stored information back to the reader. The "reader" receives and decodes the information from the RFID tag. In general, RFID tags can retain and transmit enough information to uniquely identify individuals, packages, inventory and the like. RFID tags and labels also can be characterized as to those to which information is written only once (although the information may be read repeatedly), and those to which information may be written during use. For example, RFID devices may store environmental data (that may be detected by an associated sensor), logistical histories, state data, *etc.*

The labels of the present subject matter comprise one or more RFID component(s) and/or device(s). A typical RFID device generally includes an antenna for wirelessly transmitting and/or receiving RF signals and analog and/or digital electronics operatively connected thereto. So called active or semi-passive RFID devices may also include a battery or other suitable power source. Commonly, the electronics are implemented via an integrated circuit (IC) or microchip or other suitable electronic circuit and may include, *e.g.*, communications electronics, data memory, control logic, *etc.* In operation, the IC or microchip functions to store and/or process information, modulate and/or demodulate RF signals, as well as optionally performing other specialized functions. In general, RFID devices can typical retain and communicate enough information to uniquely identify individuals, packages, inventory and/or other like objects, *e.g.*, to which the RFID device is affixed.

Commonly, an RFID reader or base station is used to wirelessly obtain data or information (*e.g.*, such as an identification code) communicated from an RFID device. Typically, an RFID device is configured to store, emit, or otherwise exhibit an identification code or other identifier(s). The manner in which the RFID reader interacts and/or communicates with the RFID device generally depends on the type of RFID device. A given RFID device is typically categorized as a passive device, an active device, a semi-passive device (also known as a battery-assisted or semi-active device) or a beacon type RFID device (which is generally considered as a sub-category of active devices). Passive RFID devices generally use no internal power source, and as such, they are passive devices which are only active when an RFID reader is nearby to power the RFID device, *e.g.*, via wireless illumination of the RFID device with an RF signal and/or electromagnetic energy from the RFID reader. Conversely, semi-passive and active RFID devices are provided with their own power source (*e.g.*, such as a small battery). To communicate, conventional RFID devices (other than so called beacon types) respond to queries or interrogations received from RFID readers. The response is typically achieved by backscattering, load modulation and/or other like techniques that are used to manipulate the RFID reader's field. Commonly, backscatter is used in far-field applications (*i.e.*, where the distance between the RFID device and reader is greater than approximately a few wavelengths), and alternately, load modulation is used in near-field applications (*i.e.*, where the distance between the RFID device and reader is within approximately a few wavelengths).

Passive RFID devices typically signal or communicate their respective data or information by backscattering a carrier wave from an RFID reader. That is, in the case of conventional passive RFID devices, in order to retrieve information therefrom, the RFID reader typically sends an excitation signal to the RFID device. The excitation signal energizes the RFID device which transmits the information stored therein back to the RFID reader. In turn, the RFID reader receives and decodes the information from the RFID device.

As previously noted, passive RFID devices commonly have no internal power supply. Rather, power for operation of a passive RFID device is provided by the energy in the incoming RF signal received by the RFID device from the RFID reader. Generally, a small electrical current induced in the antenna of the RFID device by the incoming RF signal provides sufficient power for the IC or microchip in the RFID device to power up and transmit a response. This means that the antenna generally has to be designed both to collect power from the incoming signal and also to transmit the outbound backscatter signal.

Passive RFID devices have the advantage of simplicity and long life (*e.g.*, having no battery to go dead). Nevertheless, their performance may be limited. For example, passive RFID devices generally have a more limited range as compared to active RFID devices.

Active RFID devices, as opposed to passive ones, are generally provisioned with their own transmitter and a power source (*e.g.*, a battery, photovoltaic cell, *etc*.). In essence, an active RFID device employs the self-powered transmitter to broadcast a signal which communicates the information stored on the IC or microchip in the RFID device. Commonly, an active RFID device will also use the power source to power the IC or microchip employed therein.

Generally, there are two kinds of active RFID devices-one can be considered as a transponder type of active RFID device and the other as a beacon type of active RFID device. A significant difference is that active transponder type RFID devices are only woken up when they receive a signal from an RFID reader. The transponder type RFID device, in response to the inquiry signal from the RFID reader, then broadcasts its information to the reader. As can be appreciated, this type of active RFID device conserves battery life by having the device broadcast its signal only when it is within range of a reader. Conversely, beacon type RFID devices transmit their identification code and/or other data or information autonomously (*e.g.*, at defined intervals or periodically or otherwise) and do not respond to a specific interrogation from a reader.

Generally, active RFID devices, due to their on-board power supply, may transmit at higher power levels (*e.g.*, as compared to passive devices), allowing them to be more robust in various operating environments. However, the battery or other on-board power supply can tend to cause active RFID devices to be relatively larger and/or more expensive to manufacture (*e.g.*, as compared to passive devices). Additionally, as compared to passive RFID devices, active RFID devices have a potentially more limited shelf life -- *i.e.*, due to the limited lifespan of the battery. Nevertheless, the self-supported power supply commonly permits active RFID devices to include generally larger memories as compared to passive devices, and in some instances the on-board power source also allows the active device to include additional functionality, *e.g.*, such as obtaining and/or storing environmental data from a suitable sensor.

Semi-passive RFID devices are similar to active devices in that they are typically provisioned with their own power source, but the battery commonly only powers the IC or microchip and does not provide power for signal broadcasting. Rather, like passive RFID devices, the response from the semi-passive RFID device is usually powered by means of backscattering the RF energy received from the RFID reader, *i.e.*, the energy is reflected back to the reader as with passive devices. In a semi-passive RFID device, the battery also commonly serves as a power source for data storage.

A conventional RFID device will often operate in one of a variety of frequency ranges including, *e.g.*, a low frequency (LF) range (*i.e.*, from approximately 30 kHz to approximately 300 kHz), a high frequency (HF) range (*i.e.*, from approximately 3 MHz to approximately 30 MHz) and an ultra-high frequency (UHF) range (*i.e.*, from approximately 300 MHz to approximately 3 GHz). A passive device will commonly operate in any one of the aforementioned frequency ranges. In particular, for passive devices: LF systems commonly operate at around 124 kHz, 125 kHz or 135 kHz; HF systems commonly operate at around 13.56 MHz; and, UHF systems commonly use a band anywhere from 860 MHz to 960 MHz. Alternately, some passive device systems also use 2.45 GHz and other areas of the radio spectrum. Active RFID devices typically operate at around 455 MHz, 2.45 GHz, or 5.8 GHz. Often, semi-passive devices use a frequency around 2.4 GHz.

The read range of an RFID device (*i.e.*, the range at which the RFID reader can communicate with the RFID device) is generally determined by many factors, *e.g.*, the type of device (*i.e.*, active, passive, *etc*.). Typically, passive LF RFID devices (also referred to as LFID or LowFID devices) can usually be read from within approximately 12 inches (0.33 meters); passive HF RFID devices (also referred to as HFID or HighFID devices) can usually be read from up to approximately 3 feet (1 meter); and passive UHF RFID devices (also referred to as UHFID devices) can be typically read from approximately 10 feet (3.05 meters) or more. One important factor influencing the read range for passive RFID devices is the method used to transmit data from the device to the reader, *i.e.*, the coupling mode between the device and the reader-which can typically be either inductive coupling or radiative/propagation coupling. Passive LFID devices and passive HFID devices commonly use inductive coupling between the device and the reader, whereas passive UHFID devices commonly use radiative or propagation coupling between the device and the reader.

In inductive coupling applications (*e.g.*, as are conventionally used by passive LFID and HFID devices), the device and reader are typically each provisioned with a coil antenna that together form an electromagnetic field therebetween. In inductive coupling applications, the device draws power from the field, uses the power to run the circuitry on the device's IC or microchip and then changes the electric load on the device antenna. Consequently, the reader antenna senses the change or changes in the electromagnetic field and converts these changes into data that is understood by the reader or adjunct computer. Because the coil in the device antenna and the coil in the reader antenna have to form an electromagnetic field therebetween in order to complete the inductive coupling between the device and the reader, the device often has to be fairly close to the reader antenna, which therefore tends to limit the read range of these systems.

Alternately, in radiative or propagation coupling applications (*e.g.*, as are conventionally used by passive UHFID devices), rather than forming an electromagnetic field between the respective antennas of the reader and device, the reader emits electromagnetic energy which illuminates the device. In turn, the device gathers the energy from the reader via its antenna, and the device's IC or microchip uses the gathered energy to change the load on the device antenna and reflect back an altered signal, *i.e.*, backscatter. Commonly, UHFID devices can communicate data in a variety of different ways, *e.g.*, they can increase the amplitude of the reflected wave sent back to the reader (*i.e.*, amplitude shift keying), shift the reflected wave so it is out of phase received wave (*i.e.*, phase shift keying) or change the frequency of the reflected wave (*i.e.*, frequency shift keying). In any event, the reader picks up the backscattered signal and converts the altered wave into data that is understood by the reader or adjunct computer.

The antenna employed in an RFID device is also commonly affected by numerous factor, *e.g.*, the intended application, the type of device (*i.e.*, active, passive, semi-active, *etc*.), the desired read range, the device-to-reader coupling mode, the frequency of operation of the device, *etc.* For example, insomuch as passive LFID devices are normally inductively coupled with the reader, and because the voltage induced in the device antenna is proportional to the operating frequency of the device, passive LFID devices are typically provisioned with a coil antenna having many turns in order to produce enough voltage to operate the device's IC or microchip. Comparatively, a conventional HFID passive device will often be provisioned with an antenna which is a planar spiral (e.g., with 5 to 7 turns over a credit-card-sized form factor), which can usually provide read ranges on the order of tens of centimeters. Commonly, HFID antenna coils can be less costly to produce (*e.g.*, compared to LFID antenna coils), since they can be made using techniques relatively less expensive than wire winding, *e.g.*, lithography or the like. UHFID passive devices are usually radiatively and/or propagationally coupled with the reader antenna and consequently can often employ conventional dipole-like antennas.

The labels of the present subject matter can utilize any of the noted RFID devices. In many embodiments, the RFID device is a passive device.

Additional details of RFID devices, components, and their use are described in one or more of the following US Patent Nos. 7,479,888; 7,786,868; 7,298,330; 8,633,821; and 7,368,032; and US Patent Publication Nos. 2011/0000970 and 2013/0107042.

### NFC Tags and Other Electronic Devices

In certain embodiments of the present subject matter, a system as described herein is provided for articles, products, or items using NFC communications. Generally, one or more NFC-enabled tags are incorporated or otherwise affixed to an article of interest. In many embodiments of the present subject matter, upon interrogation of an NFC tag by an NFC device, the IVS identifier and particularly an encrypted IVS identifier is provided from the system to the mobile device. The mobile device having been provided with necessary encryption key(s), obtains information associated with the IVS identifier. Typically, the IVS identifier or information includes one or both of the IVD and/or the UID. In certain embodiments, a database or other record retention means is updated upon an NFC device or other high frequency-enabled device interrogating the NFC tag. In particular embodiments of the present subject matter, the NFC tag transmits a directing Uniform Resource Locator (URL) or other information to the mobile device. Upon communication between the mobile device and the database, information regarding the article is transferred from the device to the database and the database is updated. Record(s) of the transfer and/or update are optionally established.

NFC is a set of short range wireless technologies, typically requiring a distance of 20 cm or less. NFC operates at 13.56 MHz on ISO/IEC 18000-3 air interface and at rates ranging from 106 kbit/s to 424 kbit/s. NFC involves an initiator and a target. The initiator actively generates an RF field that can power a passive target. This enables NFC targets to take very simple form factors such as tags, stickers, key fobs, or cards that do not require batteries. NFC peer-to-peer communication is possible, provided both devices are powered.

NFC tags contain data and are typically read-only, but may be rewriteable. They can be custom encoded by their manufacturers or use the specifications provided by the NFC Forum, an industry association charged with promoting the technology and setting key standards. The tags can securely store personal data such as debit and credit card information, loyalty program data, PINs and networking contacts, among other information. The NFC Forum defines four types of tags that provide different communication speeds and capabilities in terms of configurability, memory, security, data retention and write endurance. Tags currently offer between 96 and 4,096 bytes of memory.

As with proximity card technology, near-field communication uses magnetic induction between two loop antennas located within each other's near field, effectively forming an air-core transformer. Near-field communication operates within the globally available and unlicensed radio frequency ISM band of 13.56 MHz. Most of the RF energy is concentrated in the allowed +/-7 kHz bandwidth range, but the full spectral envelope may be as wide as about 1.8 MHz when using ASK modulation. Supported data rates include 106, 212 or 424 kbit/s (the bit rate 848 kbit/s is not compliant with the standard ISO/IEC 18092).

There are two modes for NFC. In a passive communication mode, the initiator device provides a carrier field and the target device answers by modulating the existing field. In this mode, the target device may draw its operating power from the initiator-provided electromagnetic field, thus making the target device a transponder. In an active communication mode; both initiator and target device communicate by alternately generating their own fields. A device deactivates its RF field while it is waiting for data. In this mode, both devices typically have power supplies. As described herein, the present subject matter typically involves an NFC-enabled (or HF-enabled) device as an initiator, and an unpowered NFC tag incorporated in an article, product, and/or related packaging as a target. Hence communication occurs via a passive mode. However, the present subject matter also includes systems using an active communication mode.

It will be appreciated that the present subject matter includes a wide array of other electronic devices beyond RFID and NFC, such as for example low energy BLUETOOTH devices (LEBs) and infrared (IR) devices. If the methods, kits, and systems utilize such devices, an appropriate reader or receiver (referred to as an "interrogator") will be utilized.

It will also be appreciated that the present subject matter includes the use of bar codes and matrix codes, such as QR codes. If the methods, kits, and systems utilize such devices, an appropriate reader or receiver (referred to as an "interrogator") for such machine-readable codes will be utilized.

When ranges are used herein for physical properties, such as molecular weight, or chemical properties, such as chemical formulae, all combinations, and subcombinations of ranges specific embodiments therein are intended to be included.

Those skilled in the art will appreciate that numerous changes and modifications can be made to the preferred embodiments of the invention and that such changes and modifications can be made without departing from the appended claims.

## Claims

1. A method for communicating between an owner of a vehicle (14) and a material provider, comprising:
providing a self-adhesive film (30) from said material provider suitable for protecting or decorating said vehicle (14);
providing a machine-readable label (50) capable of wireless communication with a content management server associated with said material provider;
applying said self-adhesive film (30) to said vehicle (14);
applying said machine-readable label (50) to said vehicle (14); and
establishing at least one wireless communication from said machine-readable label (50) to said content management server, wherein said at least one wireless communication achieves at least one of:
requesting permission from said owner for said material provider to send future communications to said owner;
triggering a warranty from said material provider for said film material to said owner;
after said material provider receives permission from said owner, sending future communications to said owner.

2. The method of claim 1,
wherein said wireless communication is initiated via an RFID-enabled interrogating device or QR-enabled interrogating device, optionally
wherein said RFID-enabled interrogating device is an NFC-enabled or HF-enabled mobile device.

3. The method of claim 1,
wherein said machine-readable label (50) comprises:
a facestock (51) comprising a first surface (52) and a second surface (53);
a pressure sensitive adhesive (54) applied on at least a portion of said first surface (52);
a machine-readable component (55) embedded in said machine-readable label (50); and
optional printed indicia (56) on said second surface (53).

4. The method of claim 3,
wherein said machine-readable component (55) is a bar code;
matrix barcode (especially QR code);
an RFID device or tag;
low energy BLUETOOTH device; or
infrared device.

5. The method of claim 3,
wherein said printed indicia (56) is present; and
wherein said printed indicia (56) comprises a trademark for said film material (30).

6. The method of claim 1,
wherein said self-adhesive film material (30) comprises:
at least one backing film (32);
a pressure sensitive adhesive (35); and
an optional release liner (36).

7. A kit for communications between an owner of a vehicle (14) and a material provider, comprising:
a self-adhesive film material (30) for protecting or decorating said vehicle (14);
a machine-readable label (50) suitable for adhering to said vehicle (14);
wherein said machine-readable label (50) comprises:
a facestock (51) comprising a first surface (52) and a second surface (53);
a pressure sensitive adhesive (54) applied on at least a portion of said first surface (52);
a machine-readable component (55) applied in or on said facestock (51); and
optional printed indicia (56) on said second surface (53),
wherein the machine-readable component (55) establishes at least one wireless communication with a content management server and wherein the at least one wireless communication achieves at least one of:
requesting permission from said owner for said material provider to send future communications to said owner;
triggering a warranty from said material provider for said film material to said owner;
after said material provider receives permission from said owner, sending future communications to said owner.

8. The kit of claim 7,
wherein the machine-readable component is a QR code or an RFID tag.

9. The kit of claim 7,
wherein said printed indicia (56) is present; and
wherein said printed indicia (56) comprises a trademark for said film material (30).

10. The kit of claim 7,
wherein said self-adhesive film material (30) comprises:
at least one backing film (32);
a pressure sensitive adhesive (35); and
an optional release liner (36).

11. A system (10) for communications between an owner of a vehicle (14) and a material provider, comprising:
said kit of claim 8; and
a content management server (12) associated with said material provider.

12. The system of claim 11, further comprising:
an interrogator (20) for said machine-readable component, optionally
wherein said interrogator is a mobile telephone or a personal digital assistant.

## Patentansprüche

1. Verfahren zur Kommunikation zwischen einem Eigentümer eines Fahrzeugs (14) und einem Materiallieferanten, umfassend:
Bereitstellen einer selbstklebenden Folie (30) von dem Materiallieferanten, die zum Schützen oder Dekorieren des Fahrzeugs (14) geeignet ist;
Bereitstellen eines maschinenlesbaren Etiketts (50), das zur drahtlosen Kommunikation mit einem Inhaltsverwaltungsserver fähig ist, der dem Materiallieferanten zugeordnet ist;
Anbringen der selbstklebenden Folie (30) an dem Fahrzeug (14);
Anbringen des maschinenlesbaren Etiketts (50) an dem Fahrzeug (14); und
Herstellen mindestens einer drahtlosen Kommunikation von dem maschinenlesbaren Etikett (50) zu dem Inhaltsverwaltungsserver, wobei die mindestens eine drahtlose Kommunikation mindestens eines von Folgendem erreicht:
Anfordern der Erlaubnis des Eigentümers, dass der Materiallieferant zukünftige Mitteilungen an den Eigentümer senden darf;
Auslösen einer Garantie des Materiallieferanten für das Filmmaterial gegenüber dem Eigentümer;
nachdem der Materiallieferant die Erlaubnis von dem Eigentümer empfangen hat, Senden zukünftiger Mitteilungen an den Eigentümer.

2. Verfahren nach Anspruch 1,
wobei die drahtlose Kommunikation über eine RFID-fähige abfragende Vorrichtung oder eine QR-fähige abfragende Vorrichtung initiiert wird, gegebenenfalls
wobei die RFID-fähige abfragende Vorrichtung eine NFC-fähige oder HFfähige mobile Vorrichtung ist.

3. Verfahren nach Anspruch 1,
wobei das maschinenlesbare Etikett (50) Folgendes umfasst:
ein Obermaterial (51), umfassend eine erste Oberfläche (52) und eine zweite Oberfläche (53);
einen druckempfindlichen Klebstoff (54), der auf mindestens einen Teil der ersten Oberfläche (52) aufgebracht ist;
eine maschinenlesbare Komponente (55), die in das maschinenlesbare Etikett (50) eingebettet ist; und
optional gedruckte Angaben (56) auf der zweiten Oberfläche (53).

4. Verfahren nach Anspruch 3,
wobei die maschinenlesbare Komponente (55) Folgendes ist: ein Strichcode;
ein Matrix-Strichcode (insbesondere QR-Code);
eine RFID-Vorrichtung oder ein RFID-Tag;
eine BLUETOOTH-Vorrichtung mit niedriger Energie;
oder eine Infrarot-Vorrichtung.

5. Verfahren nach Anspruch 3,
wobei die gedruckten Angaben (56) vorhanden sind; und
wobei die gedruckten Angaben (56) ein Markenzeichen für das Filmmaterial (30) umfassen.

6. Verfahren nach Anspruch 1,
wobei das selbstklebende Filmmaterial (30) Folgendes umfasst:
mindestens eine Trägerfolie (32);
einen druckempfindlichen Klebstoff (35); und
eine optionale Abziehfolie (36).

7. Kit zur Kommunikation zwischen einem Eigentümer eines Fahrzeugs (14) und einem Materiallieferanten, umfassend:
ein selbstklebendes Folienmaterial (30) zum Schützen oder Dekorieren des Fahrzeugs (14);
ein maschinenlesbares Etikett (50), das zum Aufkleben auf das Fahrzeug (14) geeignet ist;
wobei das maschinenlesbare Etikett (50) Folgendes umfasst:
ein Obermaterial (51), umfassend eine erste Oberfläche (52) und eine zweite Oberfläche (53);
einen druckempfindlichen Klebstoff (54), der auf mindestens einen Teil der ersten Oberfläche (52) aufgebracht ist;
eine maschinenlesbare Komponente (55), die in oder auf dem Obermaterial (51) angebracht ist; und
optional gedruckte Angaben (56) auf der zweiten Oberfläche (53),
wobei die maschinenlesbare Komponente (55) mindestens eine drahtlose Kommunikation mit einem Inhaltsverwaltungsserver herstellt und wobei die mindestens eine drahtlose Kommunikation mindestens eines von Folgendem erreicht:
Anfordern der Erlaubnis des Eigentümers, dass der Materiallieferant zukünftige Mitteilungen an den Eigentümer senden darf;
Auslösen einer Garantie des Materiallieferanten für das Filmmaterial gegenüber dem Eigentümer;
nachdem der Materiallieferant die Erlaubnis von dem Eigentümer empfangen hat, Senden zukünftiger Mitteilungen an den Eigentümer.

8. Kit nach Anspruch 7,
wobei die maschinenlesbare Komponente ein QR-Code oder ein RFID-Tag ist.

9. Kit nach Anspruch 7,
wobei die gedruckten Angaben (56) vorhanden sind; und
wobei die gedruckten Angaben (56) ein Markenzeichen für das Filmmaterial (30) umfassen.

10. Kit nach Anspruch 7,
wobei das selbstklebende Filmmaterial (30) Folgendes umfasst:
mindestens eine Trägerfolie (32);
einen druckempfindlichen Klebstoff (35); und
eine optionale Abziehfolie (36).

11. System (10) zur Kommunikation zwischen einem Eigentümer eines Fahrzeugs (14) und einem Materiallieferanten, umfassend:
das Kit nach Anspruch 8; und
einen Inhaltsverwaltungsserver (12), der dem Materiallieferanten zugeordnet ist.

12. System nach Anspruch 11, ferner umfassend:
ein Abfragegerät (20) für die maschinenlesbare Komponente, gegebenenfalls
wobei das Abfragegerät ein Mobiltelefon oder ein persönlicher digitaler Assistent ist.

## Revendications

1. Procédé de communication entre le propriétaire d'un véhicule (14) et un fournisseur de matériaux, comprenant :
la fourniture d'un film auto-adhésif (30) dudit fournisseur de matériaux approprié pour protéger ou décorer ledit véhicule (14) ;
la fourniture d'une étiquette lisible par machine (50) capable de communiquer sans fil avec un serveur de gestion de contenu associé audit fournisseur de matériaux ;
l'application dudit film auto-adhésif (30) sur ledit véhicule (14) ;
l'application de ladite étiquette lisible par machine (50) sur ledit véhicule (14) ; et
l'établissement d'au moins une communication sans fil depuis ladite étiquette lisible par machine (50) vers ledit serveur de gestion de contenu, dans lequel ladite au moins une communication sans fil obtient au moins l'un de :
la demande d'autorisation auprès dudit propriétaire pour que ledit fournisseur de matériaux envoie des communications futures audit propriétaire ;
le déclenchement d'une garantie dudit fournisseur de matériaux pour ledit matériau de film audit propriétaire ;
une fois que ledit fournisseur de matériaux a reçu l'autorisation dudit propriétaire, l'envoi de communications futures audit propriétaire.

2. Procédé selon la revendication 1,
dans lequel ladite communication sans fil est initiée via un dispositif d'interrogation compatible avec une RFID ou avec un QR, éventuellement
dans lequel ledit dispositif d'interrogation compatible avec une RFID est un dispositif mobile compatible avec une NFC ou HF.

3. Procédé selon la revendication 1,
dans lequel ladite étiquette lisible par machine (50) comprend :
un frontal (51) comprenant une première surface (52) et une seconde surface (53) ;
un adhésif sensible à la pression (54) appliqué sur au moins une partie de ladite première surface (52) ;
un composant lisible par machine (55) intégré dans ladite étiquette lisible par machine (50) ; et
des indices (56) facultatifs imprimés sur ladite seconde surface (53).

4. Procédé selon la revendication 3,
dans lequel ledit composant lisible par machine (55) est un code à barres ;
un code à barres matriciel (notamment un code QR) ;
un dispositif ou une étiquette RFID ;
un dispositif BLUETOOTH à basse consommation d'énergie ;
ou un dispositif infrarouge.

5. Procédé selon la revendication 3,
dans lequel ledit indice (56) imprimé est présent ; et
dans lequel ledit indice (56) imprimé comprend une marque de fabrique pour ledit matériau de film (30).

6. Procédé selon la revendication 1,
dans lequel ledit matériau de film auto-adhésif (30) comprend :
au moins un film de support (32) ;
un adhésif sensible à la pression (35) ; et
un protecteur (36) facultatif détachable.

7. Kit de communication entre le propriétaire d'un véhicule (14) et un fournisseur de matériaux, comprenant :
un film auto-adhésif (30) pour protéger ou décorer ledit véhicule (14) ;
une étiquette lisible par machine (50) approprié pour être collée sur ledit véhicule (14) ;
dans lequel ladite étiquette lisible par machine (50) comprend :
un frontal (51) comprenant une première surface (52) et une seconde surface (53) ;
un adhésif sensible à la pression (54) appliqué sur au moins une partie de ladite première surface (52) ;
un composant lisible par machine (55) appliqué dans ou sur ledit frontal (51) ; et
des indices (56) facultatifs imprimés sur ladite seconde surface (53),
dans lequel le composant lisible par machine (55) établit au moins une communication sans fil avec un serveur de gestion de contenu et dans lequel l'au moins une communication sans fil obtient au moins l'un de :
la demande d'autorisation auprès dudit propriétaire pour que ledit fournisseur de matériaux envoie des communications futures audit propriétaire ;
le déclenchement d'une garantie dudit fournisseur de matériaux pour ledit matériau de film audit propriétaire ;
une fois que ledit fournisseur de matériaux a reçu l'autorisation dudit propriétaire, l'envoi de communications futures audit propriétaire.

8. Le kit selon la revendication 7,
dans lequel le composant lisible par une machine est un code QR ou une étiquette RFID.

9. Le kit selon la revendication 7,
dans lequel ledit indice (56) imprimé est présent ; et
dans lequel ledit indice (56) imprimé comprend une marque de fabrique pour ledit matériau de film (30).

10. Le kit selon la revendication 7,
dans lequel ledit matériau de film auto-adhésif (30) comprend :
au moins un film de support (32) ;
un adhésif sensible à la pression (35) ; et
un protecteur (36) facultatif détachable.

11. Système (10) de communication entre le propriétaire d'un véhicule (14) et un fournisseur de matériaux, comprenant :
ledit kit selon la revendication 8 ; et
un serveur de gestion de contenu (12) associé audit fournisseur de matériaux.

12. Système selon la revendication 11, comprenant en outre :
un interrogateur (20) pour ledit composant lisible par machine, éventuellement
dans lequel ledit interrogateur est un téléphone portable ou un assistant numérique personnel.
